# EUROPEAN PATENT APPLICATION

(11) **EP 3 616 494 A1**
(43) Date of publication of application: **04.03.2020**
(21) Application number: 19187154.0
(22) Date of filing: 18.07.2019
(51) Int. Cl.: A01D 34/76, B25F 3/00, A01D 34/90

(54) **A SYSTEM FOR COUPLING A MOTOR AND AN AGRICULTURAL TOOL**

(30) Priority: 20.07.2018 IT 201800007407
(71) Applicant: Bacci, Massimiliano, 56040 Crespina-Lorenzana (Pisa) (IT)
(72) Inventor: Bacci, Massimiliano, 56040 Crespina-Lorenzana (Pisa) (IT)
(74) Representative: Celestino, Marco

(57) **Abstract**

A coupling system (1) between a motor (10) and an agricultural tool (20), wherein the motor (10) comprises a stiff tubular support (30) and a drive shaft (40) rotatably arranged within the stiff tubular support (30), wherein the drive shaft (40) has a coupling end portion (45) and the stiff tubular support (30) has an engagement end portion (31); the agricultural tool (20) comprising an outer carter (50) and a coupling shaft portion (60) rotatably arranged within the outer carter (50), and wherein the outer carter (50) has a tubular engagement portion (55); the system (1) also comprising a plurality of elongated coupling elements (70), each of which consists of a single part having first and a second coupling portions (71,72), configured to be coupled with the coupling shaft portion (60) and with the drive coupling end portion (45), respectively, through the first and second coupling portions (71,72), in order to transmit a torque from the drive shaft (40) to the coupling shaft portion (60), the coupling elements (70) having a predetermined length (L); a tubular extension portion (80) of the connection between the stiff tubular support (30) and the tubular engagement portion (55), the tubular extension portion (80) having a predetermined extension length (L') at least equal to the length (L) of the coupling element (70).

## Description

### Field of the invention

The present invention relates to agriculture and gardening. More in detail, the invention relates to a coupling system for coupling a motor and an agricultural tool with each other. In particular, the invention relates to an agricultural tool for performing such operations as harvesting, pruning, bush trimming, cut and the like, said tool including said coupling system.

The invention also relates to an agricultural motor that can be coupled to an agricultural tool through the coupling system of the invention. Moreover, the invention relates to a coupling system that can be used to connect a motor and an existing agricultural tool with each other.

### Description of the prior art

Multipurpose agricultural devices are known that comprise a motor that can be coupled with an agricultural tool, so that the motor can transmit a torque to the tool.

These multipurpose agricultural devices make it possible to perform different operations, provided a suitable tool is mounted for each operation. In particular, agricultural tools that are different in structure and function can be mounted to a same device of such devices, for instance, tools including a bush trimming head, a grass cutting head, or a harvester head for harvesting small fruit, or a small agricultural saw, a pruning head or a hedge trimmer head for cutting branches and the like.

All of these agricultural tools comprise an outer carter, a driven shaft that receives the rotational movement provided by the motor, and a mechanism for changing the rotational movement into a specific movement of the moving parts of each tool.

More in detail, the motor and the agricultural tool are rigidly coupled to each other by a tubular portion of the tool that extends from the carter and that contains the driven shaft, and by a tubular portion that is integral to the body of the motor and contains the drive shaft. This way, the drive shaft is coupled with the driven shaft so as to transmit the torque to the tool, while the body of the motor and the carter of the tool are maintained integral to each other. In particular, the coupled parts have respective coupling portions with a coupling profile, i.e. a coupling cross section, that can be, for instance, a square or hexagonal or grooved cross section.

A drawback of these known multipurpose agricultural devices is that they are made in such a way that an agricultural tool and a motor can be coupled to each other only if both of them are provided by a same manufacturer. Actually, each manufacturer provides an own coupling cross section for coupling the drive shaft and the driven shaft, which is normally different from the coupling cross sections provided by other manufacturers. For this reason, it is difficult to couple motors and agricultural tools made by two different manufactures.

For instance, if the user has a motor provided by a given manufacturer and has to perform at least one operation that cannot be made with any of the tools provided by that manufacturer, he/she is likely to be obliged to turn to another manufacturer to buy a motor that can be coupled with a specific tool suitable for carrying out the operation or the operations the user has to perform.

In these circumstances, the user will be probably obliged to have all the tools available that are required for any possible operation, along with the respective motors, and will incur the related costs.

Moreover, if a tool breaks, the user must buy a tool of the same type and produced by the same manufacturer of the motor he has available, and cannot therefore buy the tool from another manufacturer.

In DE102010013756A1 and DE19619081A1, two examples are described of a motor and an agricultural tool with an elongated tubular support within which a drive shaft is rotatably arranged. In order to transmit the torque from the motor to the agricultural tool, a joint is provided in the stiff connection between the tubular portion of the motor and the tubular portion of the carter.

EP 2 407 021 A1 describes a portable actuating machine and a transmission joint thereof connecting a drive shaft of a motor unit with an inlet shaft of a tool.

### Summary of the invention

It is therefore a feature of the present invention to provide a coupling system for coupling a motor and an agricultural tool with each other, in particular a tool for performing harvesting, pruning, bush trimming, cut operations and the like, which allows mutual connection between agricultural tools and motors provided by different manufactures without any substantial motor or tool modification.

These and other objects are achieved by a coupling system for coupling a motor and an agricultural tool with each other, as defined in claim 1. Preferred exemplary embodiments of the invention are defined by the dependent claims.

In a coupling system for coupling a motor and an agricultural tool with each other, the motor comprises a stiff tubular support and a drive shaft rotatably arranged within the stiff tubular support, wherein the drive shaft has a drive coupling end portion and the stiff tubular support has an engagement end portion, the agricultural tool comprises an outer carter and a coupling shaft portion rotatably arranged within the outer carter, and wherein the outer carter has a tubular engagement portion,
whose main feature is that it also comprises:
- a plurality of elongated coupling elements having a predetermined length L, wherein each coupling element consists of a single part having first and second coupling portions integral to each other, wherein the first coupling portion is configured to be coupled with the coupling shaft portion and wherein the second coupling portion is configured to be coupled with the drive coupling end portion through the first and the second coupling portions, respectively, so that the drive shaft is directly connected to the coupling shaft portion through one of the elongated coupling elements in order to transmit a torque from the drive coupling end portion of the drive shaft to the coupling shaft portion,
- a tubular extension portion of the connection between the stiff tubular support and the tubular engagement portion, wherein the tubular extension portion has a predetermined extension length L' that is at least equal to the length L of the coupling element.

This way, the coupling element makes it possible to transmit the torque between the drive coupling end portion of the drive shaft and the coupling shaft portion of the agricultural tool, while the tubular extension portion provides a continuous stiff support comprising, besides said tubular portion, the stiff tubular support of the motor and the outer carter of the agricultural tool, which is necessary so that the shaft can transmit the torque to the coupling shaft portion of the agricultural tool. Moreover, as the length L' of the tubular extension portion is at least equal to the length L of the coupling element, a stiff continuity is established between the outer carter and the stiff tubular support, and excessive stress in the components of the transmission is prevented from arising, which ensures a correct operation of the coupling system.

In particular, the coupling elements have their first coupling portions configured to be coupled with a predetermined coupling shaft portion and the second coupling portions configured to be coupled with possible specific drive coupling end portions of the drive shaft. This makes it possible to couple a given agricultural tool with existing motors of different types, which are typically produced by different manufacturers. This way, a user that has a given motor available can buy any agricultural tool and can always couple the latter with that motor.

As an alternative, the coupling elements have their second coupling portions configured to be coupled with a predetermined drive coupling end portion of the drive shaft and the first coupling portions configured to coupling with possible specific drive coupling end portions of the agricultural tool. This makes it possible to couple a given motor with existing agricultural tools of different types, which are typically produced by different manufacturers. This way, a user that has a given agricultural tool available can buy any motor and can always couple it with that agricultural tool.

In a first exemplary embodiment of the invention, the tubular extension portion is integral to the outer carter of the agricultural tool. This way, an agricultural tool is provided that can be coupled with different motors by means of coupling elements configured to engage, by respective coupling portions, with the coupling shaft portion and with the drive coupling end portion of the drive shaft.

In an alternative exemplary embodiment of the invention, the tubular extension portion is integral to the stiff tubular support of the drive shaft. This way, a general-purpose motor can be provided that can be coupled with different agricultural tools by means of coupling elements having different shapes, configured to engage, by respective coupling portions, with the coupling shaft portion and with the drive coupling end portion of the drive shaft.

In a further exemplary embodiment of the invention, the tubular extension portion is configured to be releasably coupled to the tubular engagement portion of the outer carter and to the stiff tubular support of the motor. This way, an existing agricultural tool can be coupled with an existing motor by a coupling element configured to allow a continuous torque transmission, while the tubular extension portion makes it possible to establish a rigid body continuity between the tubular support and the carter. A user that has a given agricultural tool and a given motor that cannot be directly coupled to each other can therefore separately purchase the tubular extension portion and the coupling elements, and is finally able to couple the tool with the motor.

In an exemplary embodiment, the first coupling portion and/or the second coupling portion has/have a right prism shape to be coupled with a conjugate right prism shape of the drive coupling end portion and/or a conjugate right prism shape of the coupling shaft portion, respectively. As an alternative, the first coupling portion and/or the second coupling portion has/have a right cylinder shape with an elliptical cross section to be coupled with a conjugate right cylinder shape with an elliptical cross section of the drive coupling end portion and/or with a conjugate right cylinder shape with an elliptical cross section of the coupling shaft portion, respectively. As an alternative, the first coupling portion and/or the second coupling portion have a cross section with a shape selected from the group consisting of: a shape comprising a single flat portion, a shape comprising a double flat portion, a key/keyway shape, a shape including a plurality of longitudinal grooves, or a shape in which radial protrusions are provided longitudinally, in particular a Z6-shape or a Z12-shape.

In particular, the first and second coupling portions of each coupling element of said plurality of coupling elements has a cross section selected from the group consisting of: a square profile, a pentagonal profile, a hexagonal profile, a heptagonal profile, a star-shaped profile, a rectangular profile, a key/keyway profile, an octagonal profile, a nonagonal profile, a grooved profile, a polygonal profile, or a profile having a shape different from the above-mentioned ones to be coupled to the coupling shaft portion and to the drive shaft, respectively.

For instance, the first and second coupling portions of the coupling element are female coupling portions. This makes it possible to couple an agricultural tool including a male coupling shaft portion with a motor including a male drive coupling end portion of the drive shaft.

As an alternative, the first and second coupling portions of the coupling element are male coupling portions. This makes it possible to couple an agricultural tool including a female coupling shaft portion with a motor including a female drive coupling end portion of the drive shaft.

As an alternative, the first coupling portion of the coupling element is a male portion and the second coupling portion is a female portion. This makes it possible to couple an agricultural tool including a female coupling shaft portion with a motor including a male drive coupling end portion of the drive shaft.

As an alternative, the first coupling portion of the coupling element is a female portion and the second coupling portion is a male portion. This makes it possible to couple an agricultural tool including a male coupling shaft portion with a motor including a female drive coupling end portion of the drive shaft.

In an exemplary embodiment, the coupling shaft portion has one end portion integrally connected to a pinion gear, in particular by a releasable integral connection, more in particular, by a screw-threaded connection. This way, a pinion gear including a coupling shaft portion can be obtained even from a commercially available pinion gear including a screw-threaded hole.

In particular, the plurality of coupling elements can engage with the pinion gear by an additional coupling element that is configured for engaging with the elongated coupling elements and with the pinion gear, respectively. This way, the user can operate an agricultural tool using different motors, by removing the coupling shaft portion from the pinion gear and replacing it with an additional coupling element that has an end portion configured to engage with the coupling element, for instance, a screw-threaded end portion.

In a possible advantageous embodiment, the first coupling portion and/or the second coupling portion of the coupling elements are arranged to be magnetically coupled with the coupling shaft portion and with the drive coupling end portion of the drive shaft, respectively.

In a further advantageous exemplary embodiment, the second coupling portion and/or the coupling shaft portion comprise a resilient ring arranged in such a way that the second coupling portion and/or the coupling shaft portion frictionally engage with the drive coupling end portion of the drive shaft and with the first coupling portion, respectively.

### Brief description of the drawings

Further characteristic and/or advantages of the present invention will be made clearer with the following description of its exemplary embodiments, exemplifying but not limitative, with reference to the attached drawings in which:
- Fig. 1 is an elevational side view of a group in which a motor and an agricultural tool are connected to each other by a coupling system comprising a coupling element according to the invention;
- Figs. 2 and 3 are exploded cross-sectional views diagrammatically showing the coupling system between the motor and the agricultural tool according with three different exemplary embodiments of the invention;
- Fig. 4 is a cross-sectional view diagrammatically showing the coupling system between the motor and the agricultural tool according with another exemplary embodiment of the invention;
- Figs. 5-7 are diagrammatical cross-sectional views of the drive shaft and of the coupling shaft portion connected by the coupling element, in respective exemplary embodiments of the invention;
- Fig. 8 is a cross-sectional view diagrammatically showing the coupling system between the motor and the agricultural tool according with a further exemplary embodiment of the invention, in which the coupling shaft portion has one screw-threaded end portion configured to be releasably connected with a pinion gear;
- Fig. 9 shows diagrammatical cross-sectional views of the coupling element, in particular, cross-sectional views of exemplary coupling cross sections;
- Fig. 10 is a diagrammatical exploded cross-sectional view of the outer carter and of a stiff tubular support connected to each other by a tubular connection element;
- Figs. 11-14 are diagrammatical exploded cross-sectional views of the drive shaft, of the coupling element and of the coupling shaft portion, in which a magnetic element is provided for coupling the drive shaft and the coupling element and/or for coupling the coupling shaft portion and the coupling element, according with an exemplary embodiment of the invention;
- Figs. 15 and 16 are diagrammatical exploded cross-sectional views of the drive shaft, of the coupling element and of the coupling shaft portion, in which a resilient ring is provided for frictionally coupling the drive shaft with the coupling element and/or for frictionally coupling the coupling shaft portion with the coupling element;
- Fig. 17 is a diagrammatical exploded cross-sectional view of the coupling shaft portion and of a pinion gear in which respective threads are provided for mutual connection;
- Fig. 18 is a cross-sectional view diagrammatically showing the coupling system between the motor and the agricultural tool according with a further exemplary embodiment, in which the coupling element engages with a pinion gear by an additional screw-threaded coupling element.

### Description of some preferred exemplary embodiments

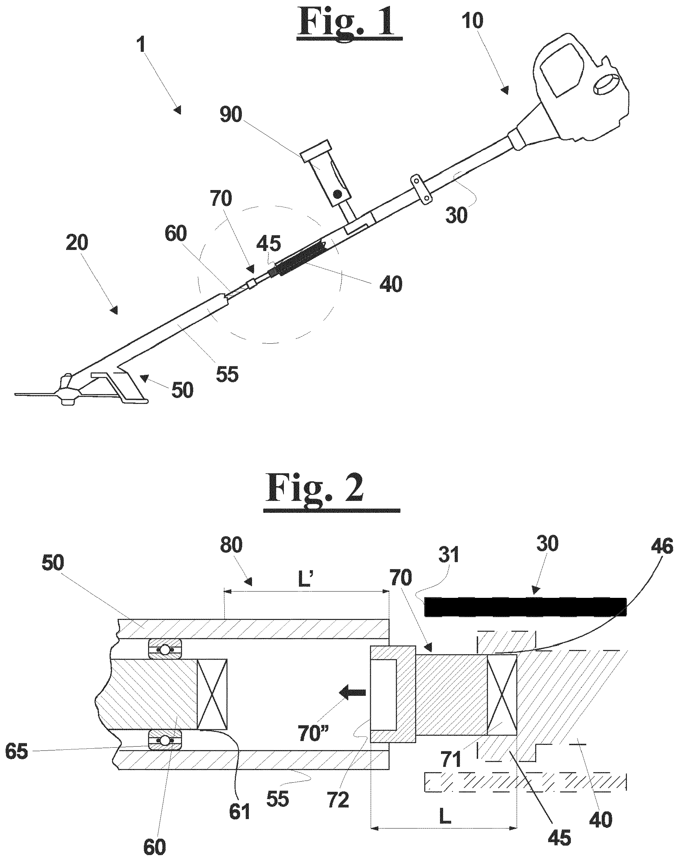

Fig. 1 is an elevational side view of a multipurpose agricultural device comprising a coupling system 1 for coupling a motor 10 and an agricultural tool 20. For instance, agricultural tool 20 can be a blade trimmer, an olive harvester, a grass cutter, a harvester head, a small agricultural saw, a pruning tool, a hedge trimmer, or a tool different from the above-mentioned ones.

Motor 10 can be an internal combustion engine or an electric motor comprising a stiff tubular support 30 to which a handle 90 is integrally connected for a user. Motor 10 also comprises a drive shaft 40 rotatably arranged within stiff tubular support 30. For instance, drive shaft 40 can be rotatably supported by rotational bearings, or by bushings arranged within stiff support 30, or by a different support means, not shown. Drive shaft 40 comprises a drive coupling end portion 45, while stiff tubular support 30 comprises an engagement end portion 31.

Agricultural tool 20 comprises an outer carter 50 having a tubular engagement portion 55. Agricultural tool 20 also comprises a coupling shaft portion 60, rotatably arranged within carter 50. For example, coupling shaft portion 60 can rotate within carter 50 and be supported by rotational bearings 65, as shown in Fig. 2, or by bushings, or by a different support means, not shown.

As shown in Figs. 2-4, according to the invention, a coupling system between motor 10 and agricultural tool 20 comprises a plurality of coupling elements 70 of length L, each of which has a first coupling portion 71 and a second coupling portion 72. First coupling portion 71 is configured to be coupled with coupling shaft portion 60, whereas second coupling portion 72 is configured to be coupled with drive coupling end portion 45, in order to transmit a torque from drive coupling end portion 45 of drive shaft 40 to coupling shaft portion 60.

Moreover, said coupling system comprises a tubular extension portion 80 of length L' for connecting stiff tubular support 30 and tubular engagement portion 55. Extension length L' is at least equal to length L of coupling elements 70 configured for connecting a tubular extension portion 80, as shown in Figs. 2-4.

Fig. 2 shows a coupling system 1 (Fig. 1), according to the invention, in a particular exemplary embodiment in which tubular extension portion 80 is integral to outer carter 50 of tool 20. Coupling element 70 engages with coupling shaft portion 60 such that extension length L' is at least equal to length L of coupling element 70.

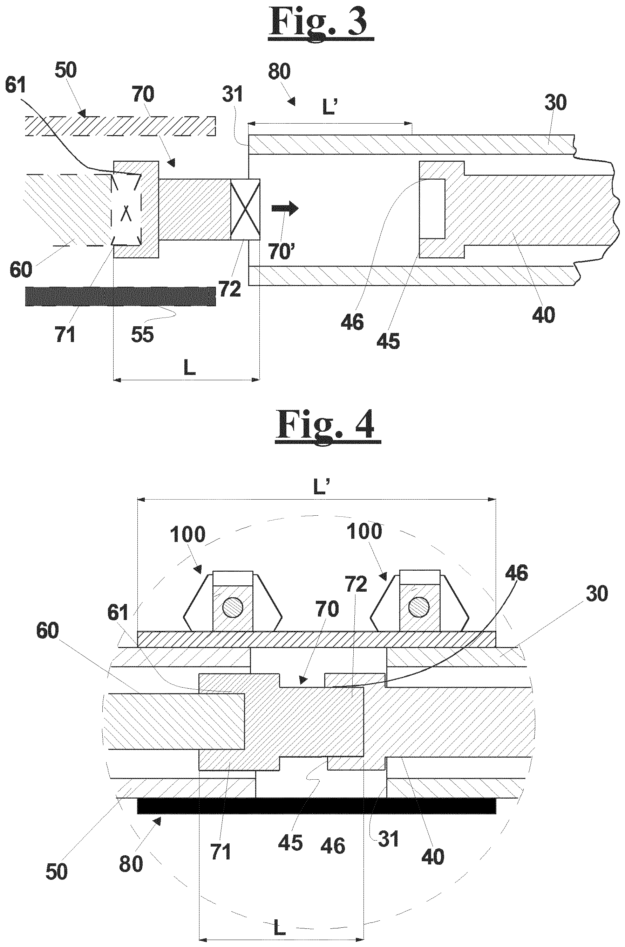

Fig. 3 relates to a coupling system 1 (Fig. 1), according to the invention, in a particular exemplary embodiment, in which tubular extension portion 80 is integral to stiff tubular support 30. In this case, motor 10 has an extension of length L' of the stiff tubular support 30 such that, when coupling element 70 engages with drive shaft 40, tubular support 30 forms a stiff connection with tubular engagement portion 55 of carter 50.

Fig. 4 relates to a further exemplary embodiment of coupling system 1 (Fig. 1) between motor 10 and agricultural tool 20, in which tubular extension portion 80 is configured to be releasably coupled to tubular engagement portion 55 of outer carter 50 and to engagement end portion 31 of stiff tubular support 30. Coupling element 70 is coupled with coupling shaft portion 60 by its own first coupling portion 71 and is coupled with drive coupling end portion 45 of drive shaft 40 by its own second coupling portion 72, so that a torque can be transmitted from drive shaft 40 to coupling shaft portion 60.

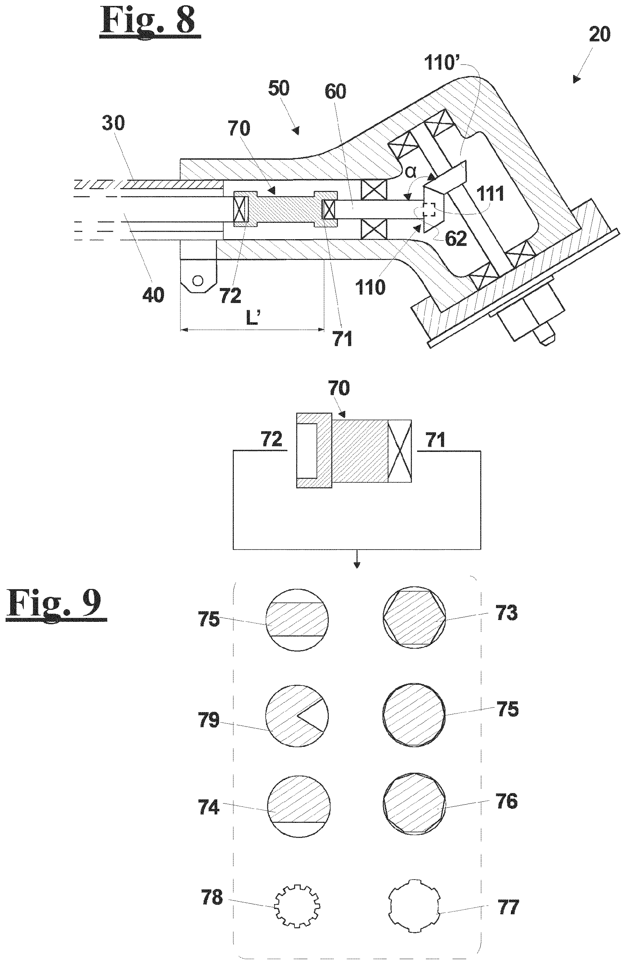

In figures 2-4, and in other subsequent figures, drive coupling end portion 45 has a drive prism shape 46 and coupling shaft portion 60 has a tool-side prism shape 61, and also correspondent coupling portions 71 and 72 are prism-shaped portions. However, as explained hereinafter with reference to Fig. 9, tool-side shape 61, drive shape 46, as well as the shape of coupling portions 71 and 72 can be different from a prism shape, for instance they can be an elliptical cylinder shape or a shape different from the above-mentioned ones. Normally, coupling portions 71 and 72 are different in shape or at least in size, so as to allow mutual coupling of drive coupling end portions 45 and coupling shaft portions 60, even if they are different in shape, for example they can have shapes as provided by different manufacturers of motor 10 and of agricultural tool 20.

Tubular support 30 and carter 50 are connected to each other by tubular extension portion 80, which has a predetermined length L' at least equal to length L of coupling element 70, so as to form a single rigid body. In the exemplary embodiment of Fig. 4, the coupling of extension portion 80 with carter 50 and with tubular support 30 is obtained by a conventional connection element 100, for example, by a screwed clamp.

In particular, both first coupling portion 71 and second coupling portion 72 can have a square cross section. More in particular, in coupling element 70 of Fig. 4, first coupling portion 71 is a female portion such as a bush, while second coupling portion 72 is a male portion having a square cross section, which can be coupled with female drive coupling end portion 45 of drive shaft 40. First and second coupling portions 71,72 of coupling element 70 can have various shapes such as, besides a square shape, a pentagonal shape, a hexagonal shape, a heptagonal shape, a star-shaped shape, a general rectangular shape, a key/keyway shape, an octagonal shape, a nonagonal shape, a grooved shape, a regular or irregular polygonal shape generally, or even a different shape, so that it can be coupled with coupling shaft portion 60 and with drive shaft 40, having corresponding shapes, respectively.

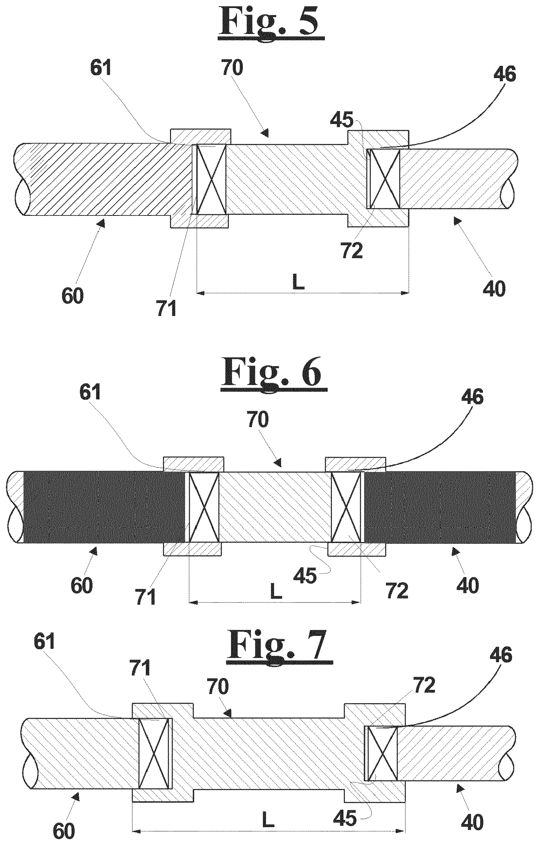

Fig. 5 relates to an exemplary embodiment of the invention, in which coupling shaft portion 60 has a female coupling portion with a square cross section, while drive shaft 40 has a male drive coupling end portion 45 with a square cross section. First and second coupling portions 71,72 of coupling element 70 are male and female coupling cross sections, respectively.

Fig. 6 relates to an exemplary embodiment of the invention, in which coupling shaft portion 60 and drive shaft 40 have respective female coupling end portions with a square cross section. Coupling element 70 is coupled with coupling shaft portion 60 and with drive shaft 40 by male square cross section coupling portions 71,72.

Fig. 7 relates to an exemplary embodiment of the invention, in which coupling shaft portion 60 and drive shaft 40 have male coupling end portions with a square cross section. Coupling element 70 is coupled with coupling shaft portion 60 and with drive shaft 40 by female square cross section coupling portions 71,72.

Fig. 8 relates to an exemplary embodiment of the invention, in which coupling shaft portion 60 has a screw-threaded end portion 62 for establishing a releasable connection with a pinion gear 110, so as to transmit a torque to agricultural tool 20. In particular, pinion gear 110 has screw-threaded hole 111 for receiving a screw-threaded end portion 62 of coupling shaft portion 60. With such a connection between pinion gear 110 and the conjugate wheel 110' of agricultural tool 20, the torque can be transmitted between drive shaft 40 and the inlet shaft 115 of agricultural tool 20, which are at an angle α with respect to each other.

Fig. 9 shows some possible cross-sectional shapes of coupling portions 71,72 of coupling elements 70, configured to be coupled with joint with shape 61 of coupling shaft portion 60 and with shape 46 of drive coupling end portion 45, i.e. configured to be coupled therewith. For instance, coupling portions 71,72 can have a hexagonal cross section 73, or a shape 74,75 including a single or double flat portion, or a key/keyway shape 79 of various profile, or a regular polygonal shape 75,76, normally a hexagonal or nonagonal shape, or a shape 77 including a plurality of longitudinal grooves, or a shape 78 comprising longitudinal projections, such as a so-called Z6-shape or Z12-shape.

Cross-sectional shape of coupling portions 71,72 can also be a shape different from the above-mentioned ones, both in the case of a shaft connection and in the case of a bushing connection.

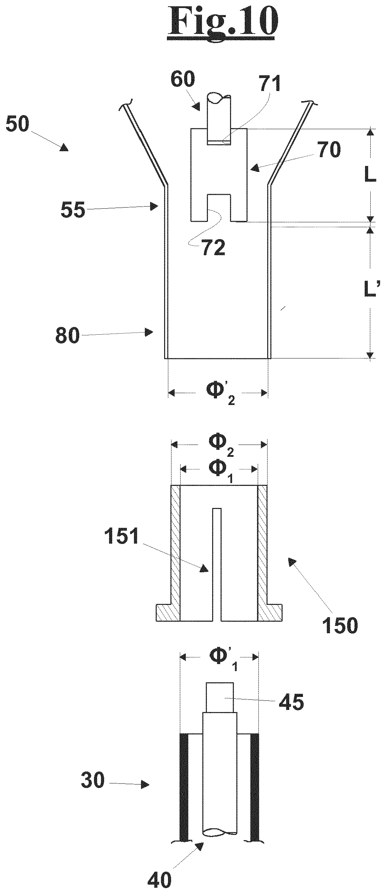

Fig. 10 relates to an exemplary embodiment of the invention, in which a tubular connection element 150 is provided between tubular engagement portion 55 and stiff tubular support 30. In particular, tubular connection element 150 has an inner diameter φ₁ at least equal to an outer diameter φ'₁ of stiff tubular support 30, and an outer diameter φ₂ at least equal to an inner diameter φ'₂ of tubular engagement portion 55.

Tubular connection element 150 has a longitudinal slit 151 that increases elasticity of tubular connection element 150, which makes it easier to engage it with tubular engagement portion 55 and with stiff tubular support 30.

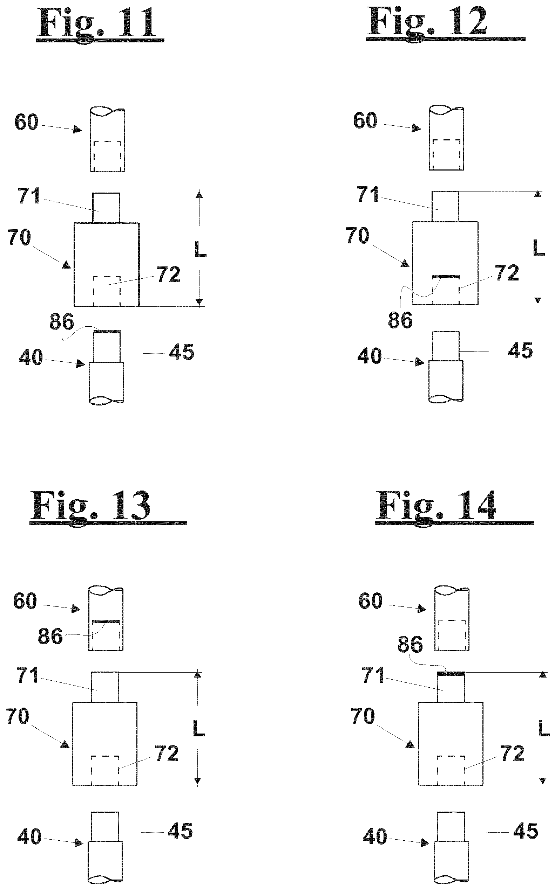

Figs. 11 and 12 relate to some exemplary embodiments of the invention, in which drive shaft 40 is coupled with coupling element 70 by a magnetic element 86 arranged at drive coupling end portion 45 of drive shaft 40 (Fig. 11) or arranged at second coupling portion 72 of coupling element 70 (Fig. 12).

Figs. 13 and 14 relate to some exemplary embodiments of the invention, in which coupling element 70 engages with coupling shaft portion 60 of agricultural tool 20 through a magnetic element 86 arranged at the end portion of coupling shaft portion 60 (Fig. 13) or arranged at the end portion of first coupling portion 71 (Fig. 14).

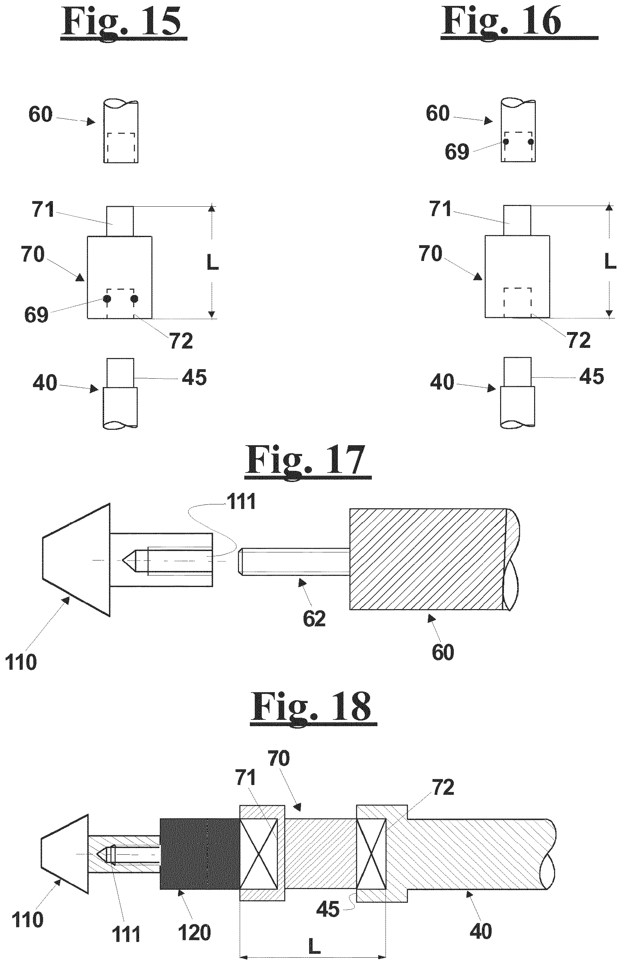

Figs. 15 and 16 relate to some exemplary embodiments of the invention, in which coupling element 70 engages with male end portion 45 of drive shaft 40 and with the female coupling end portion of coupling shaft portion 60 by an O-ring type resilient ring 69, respectively. In particular, in Fig. 15 resilient ring 69 is arranged at female second coupling portion 72, while in Fig. 16 resilient ring 69 is arranged at the female coupling end portion of coupling shaft portion 60. The resilient ring serves to avoid relative axial sliding of the connected parts.

Fig. 17 shows in detail a possible screw-threaded coupling between coupling shaft portion 60 and a pinion gear 110, for example for a coupling according to a modification of the exemplary embodiment of Fig. 8. In particular, coupling shaft portion 60 has a screw-threaded end portion 62 configured to engage with an axial screw-threaded hole 111 of the pinion gear. This makes it possible to releasably connect pinion gear 110 and coupling shaft portion 60 with each other. In Fig. 18, coupling element 70 also engages with pinion gear 110 by an additional coupling element 120, for example, in a coupling according to a modification of the exemplary embodiment of Fig. 8.

The foregoing description of some exemplary specific embodiments will so fully reveal the invention according to the conceptual point of view, so that others, by applying current knowledge, will be able to modify and/or adapt in various applications the specific exemplary embodiments without further research and without parting from the invention, and, accordingly, it is meant that such adaptations and modifications will have to be considered as equivalent to the specific embodiments. The means and the materials to realize the different functions described herein could have a different nature without, for this reason, departing from the field of the invention. It is to be understood that the phraseology or terminology that is employed herein is for the purpose of description and not of limitation.

## Claims

1. A coupling system (1) for coupling a motor (10) and an agricultural tool (20) with each other, wherein:
- said motor (10) comprises a stiff tubular support (30) and a drive shaft (40) rotatably arranged within said stiff tubular support (30), wherein said drive shaft (40) has a drive coupling end portion (45) and said stiff tubular support (30) has an engagement end portion (31),
- said agricultural tool (20) comprises an outer carter (50) and a coupling shaft portion (60) rotatably arranged within said outer carter (50), and wherein said outer carter (50) has a tubular engagement portion (55),
**characterized in that** it also comprises:
- a plurality of elongated coupling elements (70) having a predetermined length (L), wherein each of said elongated coupling elements (70) consists of a single part having a first coupling portion (71) and a second coupling portion (72) integral to each other, wherein said first coupling portion (71) is configured to be coupled with said coupling shaft portion (60), and wherein said second coupling portion (72) is configured to be coupled with said drive coupling end portion (45), so that said drive shaft (40) is directly connected to said coupling shaft portion (60) through one of said elongated coupling elements (70), in order to transmit a torque from said drive coupling end portion (45) of said drive shaft (40) to said coupling shaft portion (60),
- a tubular extension portion (80) of the connection between said stiff tubular support (30) and said tubular engagement portion (55), wherein said tubular extension portion (80) has a predetermined extension length (L') that is at least equal to said length (L) of said coupling elements (70).

2. A coupling system (1) according to claim 1, wherein said tubular extension portion (80) is integral to said stiff tubular support (30).

3. A coupling system (1) according to claim 1, wherein said tubular extension portion (80) is integral to said outer carter (50).

4. A coupling system (1) according to claim 1, wherein said tubular extension portion (80) is configured to be releasably coupled to said tubular engagement portion (55) of said outer carter (50) and to said engagement end portion (31) of said stiff tubular support (30).

5. A coupling system (1) according to claim 1, wherein said first coupling portion (71) and/or said second coupling portion (72) has/have a right prism shape to fit a conjugate right prism shape (46,61) of said drive coupling end portion (45) and/or a conjugate right prism shape (61) of said coupling shaft portion (60), respectively.

6. A coupling system (1) according to claim 1, wherein said first coupling portion (71) and/or said second coupling portion (72) has/have a right cylinder shape with an elliptical cross section to fit a conjugate right cylinder shape with an elliptical cross section (46,61) of said drive coupling end portion (45) and/or a conjugate right cylinder shape with an elliptical cross section (61) of said coupling shaft portion (60), respectively.

7. A coupling system (1) according to claim 1, wherein the cross section of said first coupling portion (71) and/or of said second coupling portion (72) is selected from the group consisting of: a shape comprising a single flat portion, a shape comprising a double flat portion, a key/keyway shape, a shape including a plurality of longitudinal grooves, or a shape in which radial protrusions are provided longitudinally, in particular a Z6-shape or a Z12-shape.

8. A coupling system (1) according to claim 1, wherein said first and second coupling portions (71,72) of said plurality of coupling elements (70) are selected from the group consisting of: female coupling portions; male coupling portions.

9. A coupling system (1) according to claim 1, wherein said first coupling portion (71) of said plurality of coupling elements (70) is selected from the group consisting of: a male coupling portion and a female coupling portion, and said second coupling portion (72) is selected from the group consisting of: a female coupling portion and a male coupling portion, respectively.

10. A coupling system (1) according to claim 1, wherein said coupling shaft portion (60) has one end portion (62) integrally connected to a pinion gear (110), in particular by a releasable integral connection, more in particular, by a screw-threaded connection (111).

11. A coupling system (1) according to claim 10, wherein said plurality of elongated coupling elements (70) engages with said pinion gear (110) by an additional coupling element (120).

12. A coupling system (1) according to claim 1, wherein said first coupling portion (71) and/or said second coupling portion (72) of said coupling elements (70) are arranged to be magnetically coupled with said coupling shaft portion (60) and with said drive coupling end portion (45), respectively.

13. A coupling system (1) according to claim 1, wherein said second coupling portion (72) and/or said coupling shaft portion (60) comprise a resilient ring (69) arranged in such a way that said second coupling portion (72) and/or said coupling shaft portion (60) frictionally engage with said drive coupling end portion (45) and with said first coupling portion (71), respectively.
